# EUROPEAN PATENT APPLICATION

(11) **EP 2 075 059 A1**
(43) Date of publication of application: **01.07.2009**
(21) Application number: 07123278.9
(22) Date of filing: 14.12.2007
(51) Int. Cl.: B01J 19/12, B01J 4/02, B01J 8/08, B01J 8/10

(54) **Devices and methods for performing microwave-assisted chemical synthesis**

(71) Applicant: Biotage AB, 753 18 Uppsala (SE)
(72) Inventor: Nordlund, Erik, 753 24 Uppsala (SE); Strandell, Axel, 753 72 Uppsala (SE); Wessman, Anders, 753 35 Uppsala (SE)
(74) Representative: Franks, Barry Gerard

(57) **Abstract**

Devices and methods for performing microwave-assisted chemical synthesis including heterogeneous starting materials, comprising a reaction vessel (9), a microwave source (3) for generating microwave electromagnetic radiation, means for transporting microwave electromagnetic radiation (5) to said reaction vessel (9), at least one liquid reservoir (15) containing a liquid component, means for transporting a liquid component (43) from a liquid reservoir to said reaction vessel, wherein it further comprises an automated system for dispensing solid starting material (59) into said reaction vessel.

## Description

### FIELD OF THE INVENTION

This invention relates to methods and devices for performing microwave-assisted chemical reactions.

### BACKGROUND OF THE INVENTION

Systems for small-scale microwave-assisted organic chemical synthesis are prevalent in the industry today, however, systems for rapidly scaling reactions from bench top scale volumes of less than 20ml to volumes of one litre or greater are much less successful. This depends in part on a number of constraints imposed by the laws of physics on the design and operation of large scale and/or large throughput microwave chemical synthesis apparatus.

The most obvious route of scaling-up a reaction, i.e. increasing the obtainable amount of reaction product by increasing the reaction volume simply by using a larger reaction vessel, is impractical due to two important aspects of microwave physics, namely the depth of penetration of microwaves into the reagents and the occurrence of arcing at high field intensities. The depth of penetration of microwaves in an effective microwave-absorbing medium is low which will cause the heating of a large volume to be more reminiscent of conventional convective heating, i.e. the outer surface will be rapidly warmed and heat will then be more slowly conducted into the bulk of the material. Furthermore in order to heat a large-scale reaction mixture at the same rate as used in a small-scale reaction vessel, very high microwave field intensities are needed to transfer the large amount of energy needed. Such high field intensities are known to increase the risk of arcing and subsequent plasma formation: this is an unacceptable hazard in a system which may contain large volumes of volatile solvents.

The second obvious route to increase the obtainable amount of the reaction product is to create a continuous flow system or a stop-flow system that pumps the reagents from one or more loading tanks into a small reaction vessel. A number of different such systems are known in the art, see for example US6989519. This approach is unsuitable for use with many reaction mixtures intended for chemical synthesis, since a system for such applications must be able to add the starting materials to the reaction vessel in very precise proportions. In the following the expression "starting materials" may include, but are not limited to, one or more reagents, catalysts, solvents or additives.

In order to be able to run a series of runs in a small reaction vessel, there must be a way of adding a new set of starting materials after each run. The outcome of a chemical reaction is closely linked to the ratio between the reagents used in the reaction, provided other reaction conditions, such as temperature, pressure, duration and intensity of the microwave energy applied, remain the same during each run. Ensuring the same reagent ratios in each run is important if all the runs are to be pooled later, as impurities formed in one run would cause purification problems for the total pooled volume.

In a simple chemical synthesis case, using homogeneous solutions, the addition of starting materials to the reaction vessel can be done by pumping discrete portions of each starting material from a reservoir into the reaction vessel.

In the following, the term heterogeneous as applied to reaction mixtures or starting materials will be defined as meaning reaction mixtures or starting materials which could contain multiple immiscible liquid phases and/or solids and/or liquid reactants and solvents in combination with solid catalysts and/or solid-supported reagents; and it will also mean solid catalysts and/or solid-supported reagents and/or solid starting material which if combined with a liquid would form a heterogeneous reaction mixture. In the case of a heterogeneous reaction mixture it is very difficult to achieve reproducibility in the addition of the starting materials for a chemical synthesis, especially if the same machinery will be required to ensure such reproducibility for a wide range of reaction mixtures. This is due to the difficulty of mixing, sampling and transporting a heterogeneous mixture in a way that ensures that the ratios of the different phases do not change. This is because, firstly, in practice it is essentially impossible to mix multiple immiscible phases such that the ratio of the components is exactly the same throughout the agitated volume. Secondly, even if it was possible to create such a perfect mix, it would be difficult to sample it in a reproducible way. This is especially true if the same sampling apparatus is intended to be used for taking samples from a number of different mixtures which have differing physical properties. For example a sampling apparatus suitable for sampling low viscosity liquids may be unable to sample a high viscosity liquid. Additionally if a liquid contains particles and the size of the particles are similar in size to the sampling orifice or if they take up a large proportion of the sampling volume then it is difficult to ensure that samples taken from the liquid contain the same proportion of particles. Both of these conditions can apply to an apparatus used for organic chemical synthesis. Thirdly, pumping or pouring a heterogeneous mixture carries the risk of separating the mixture, and causing some parts thereof to remain in the container that the mixture has been transported in. Apart from ruining the reaction outcome by changing the ratios of the reaction components, such deposits could also cause performance problems in the apparatus by clogging pipes or, especially in the case of particles, causing excessive wear of moving parts.

### SUMMARY OF THE INVENTION

An object of the present invention is to provide methods and devices for performing microwave assisted chemical reactions, in particular organic chemical synthesis. More specifically the present invention relates to devices and methods for the performing of reactions that involve starting materials that before the start of the reaction cannot be homogenously mixed because of insolubility, reactivity, physical form or a combination thereof.
The present invention overcomes the problems present in the prior art by adding separately the starting materials that cannot be transported or cannot be stored as a stable homogenous mixture by for example separating them into one or more separate compartments prior to automatically adding them into the reaction vessel.

In a first embodiment of the invention a solution to the problem of reproducibly adding the starting materials of a heterogeneous reaction mixture is achieved by avoiding premixing the components of starting materials that would result in a heterogeneous mixture or would react with each other. Instead, each component is introduced separately into the reaction chamber. Liquid starting materials can be pumped with a measuring pump and solid starting materials can be weighed out and dispensed from a weighing means or dispensed from containers containing a specified amount of the component or dispensed by an auger. For liquid starting materials it can be assumed that each is a homogenous mixture or a pure solvent, i.e. that it can remain in an unstirred vessel for an indeterminate period of time without separating into a plurality of phases. Consequently a measuring pump can be sufficient to make sure that the same volume of liquid is introduced for each batch.

For solid starting materials it may be assumed that the chemical synthesis requires that a specified amount, exemplified in the following by a specified weight, of each starting material must be measured out for each batch and then preloaded into a container. This could be done by a subsystem of the apparatus which weighs out the specified amount of the solid starting material and loads it into a specific compartment for each component in a loading system which during the chemical synthesis is arranged to automatically dispense each starting material into the reaction chamber at the appropriate time. The subsystem could be a system that feeds and measures a specified amount of starting materials from bulk storage into the compartments, or a system that empties pre-filled vials or bottles containing a specified amount of starting materials into the compartments. In the case of solid starting materials comprising 2 or more compounds, the specified amount of each compound may be supplied to compartment reserved for only that compound and the compounds subsequently dispensed simultaneously or sequentially, and/or the specified amounts of 2 or more of the compounds may be supplied to the same compartment and subsequently dispensed simultaneously or sequentially.

Alternatively starting materials could be loaded manually by an operator who weighs out and preloads the specified amount of each solid starting material into a specific compartment for each solid starting material and/or two or more of the solid starting materials in one compartment in the loading system. Alternatively a solid compound could be loaded into a compartment in the loading system by precision loading device such as an augur which delivers a precise, known amount of the solid compound for each revolution of the augur screw. The loading system is then ready for the automated dispensing of the solid starting materials into the reaction vessel.

The step of loading specified amounts of solid starting materials into a dispensing unit provides the advantage that it is possibly to start the chemical synthesis with accurately known amounts of starting material. This is because it is possible to very accurately dispense a specified amount of solid material (e.g. by weighing) as compared to dispensing a specified amount of a heterogeneous mixture comprising two or more immiscible compounds (for which, even if its amount is accurately known, the proportion of the constituent compounds cannot be easily accurately measured). The use of this solid dispensing method allows the user to be confident that each reaction run starts with exactly the right amount of each starting material, ensuring thereby that a product with essentially the same purity and/or conversion is obtained after each reaction run. The reaction products of a plurality of runs can subsequently be pooled in the same storage container with no loss of purity and/or change in conversion.

In a preferred embodiment according to the present invention a run may be started by first opening a reaction vessel in order to introduce into it a system for loading solid starting materials in which at least one compartment has been loaded with a specified amount of a solid starting material. This loading system is arranged to automatically dispense each starting material from its respective compartment directly into the reaction vessel. The loading system may then be removed from the reaction vessel and the reaction vessel closed and sealed in preparation for the addition of liquid components. Closing and sealing the reaction vessel reduces the risk of agitating the solids into the surrounding air during the addition of liquids. Liquids may be pumped into the reaction vessel via a valve. Microwave heating may then be applied, preferably by following a predetermined heating sequence, until the desired reaction is complete. After the completion of the chemical reaction, the reaction contents may be evacuated. Use of a pump may not be preferable to evacuate the contents of the reaction vessel as pumps may suffer from the problems with separation and abrasion as mentioned above. Preferably the pressure inside the reaction vessel from superheated solvents may be employed to drive the reaction contents out of the reaction vessel through an opening in or at the bottom of the reaction vessel, thereby fully emptying the reaction vessel. In case the internal pressure is not enough to completely empty the reaction vessel of the reaction contents, a pressurized inert gas such as N₂ may be applied in order to complete the evacuation of the reaction contents.

A preferred embodiment of an apparatus in accordance with the present invention comprises the following components: a reaction vessel, a system for loading liquids into the reaction vessel, a system for loading solid starting materials into the reaction vessel, a system for withdrawal and collection of reaction vessel contents, a system for applying and controlling the microwaves used for heating the reaction and a system for providing automated control of the other systems.

As the core of the system, the reaction vessel must enable loading of both solids and liquids, as well as the evacuation of reaction contents. The reaction vessel must also withstand the increase of pressure which occurs during heating whilst at the same time permitting the introduction of microwave energy into the reaction components. Additionally the vessel preferably allows stirring of the reaction components and can be provided with sensors for reading the temperature and pressure inside the reaction vessel, or other desired means for monitoring the reaction.

In an embodiment of the invention the reaction vessel is in the form of a tubular reservoir, closed at the lower end and able to be fitted with a pressure resistant lid at the upper end. The lid and reaction vessel may be separated to allow the insertion of starting materials and for cleaning purposes. At least the lower part of the reaction vessel is intended during use to be positioned in a microwave cavity and has an outer wall that is made from microwave transparent material. The lid (and, if necessary, the reaction vessel) may be provided with entry ports for a stirrer, sensors and fluid transport pipes.

Preferably there are four or more fluid transport pipes, each connected to a separate entry port. Each set of a transport pipe and an entry port may be provided with a valve which can be remotely operated to open or close access to the interior of the reservoir. Preferably at least two entry ports are provided with pipes which, when the lid is sealed to the reaction vessel, may extend to the bottom of the reaction vessel to allow the evacuation of the contents of the reaction vessel. Preferably, at least two further fluid transport pipes may be used to load liquids before and, if required during, the chemical synthesis and they may also be used for venting pressure built up in the reaction vessel and/or, by being connected to a source of compressed fluid, pressurizing the reaction contents. These further two fluid transport pipes do not extend to the bottom of the reaction vessel.

The system for loading liquids preferably comprises one tank or container for each liquid component used in the reaction for holding liquid components for the reaction, each tank being connected to a liquid transporting means, for example a metering pump or pressurised fluid supply and flow meter, preferably via a multiport valve. The multiport valve may also hold connections to feed lines for a cleaning solvent and an inert gas as well as output lines to the main reaction vessel and a waste bypass line leading directly to a waste container or drain.

Such a liquid loading system could perform the following operations:
Transfer of reaction solution or cleaning solution to the waste bypass line in order to prime the tubing leading up to the multiport valve before a sequence of reaction runs starts. Transfer in sequence of a specified volume of each liquid component from the respective tank to the reaction vessel before the start of each reaction run. Optionally an inert gas may be supplied from its feed line to the reaction vessel to purge the main output line and minimize the error of measurement after each liquid component has been loaded.
Transfer of a specified volume of cleaning solvent to the reaction vessel to clean its interior between reaction runs.
Transfer of inert gas to reagent vessels to purge the input lines after a sequence of reaction runs finishes.
Transfer of cleaning solvent to the waste bypass line to clean the interior of the pump when switching reagents.

The system for loading solid starting materials preferably comprises a dispensing unit such as a dispensing carousel comprising a plurality of compartments that can be loaded with solid starting materials either manually by the user or by an automated dispenser. Preferably the carousel may be loaded with the required amounts of solid starting materials outside the reaction vessel and then placed in such a way that the preloaded materials may be dispensed into the reaction vessel, using an automated system, upon starting a new reaction run. Preferably each compartment has a remotely operated movable or openable bottom which allows the entire contents of the compartment to be emptied into the reaction vessel when the contents are to be used in a reaction which takes place in the reaction vessel. As an alternative, the compartments can be arranged as through holes in a rotor which is mounted on a fixed stator which has a dispensing opening passing through it. During use the stator is positioned so that the dispensing opening is above the interior of the reaction vessel. The dispensing opening is the same shape and size as, or is bigger than, and is able to be aligned with, the through holes in the rotor such that when a compartment in the rotor is rotated to a position above the opening then the contents of the compartment drop through the opening into the reaction vessel. With this arrangement, if the stator is held in the same position relative to the reaction vessel during dispensing then the dispensed starting materials will fall on substantially the same part of the reaction vessel, which may be advantageous for some reactions. Furthermore with a dispensing opening in a fixed stator, the size of the dispensing carousel is not limited to having the same diameter or a smaller diameter than the diameter of the reaction vessel - as only the opening of the stator needs to be positioned over the reaction vessel.

It is also conceivable that the dispensing device has compartments which are arranged as through holes in a stator under which is mounted a movable rotor which has a dispensing opening passing through it. Dispensing of the contents of a compartment is then achieved by rotating the rotor so that the dispensing opening in it is under the appropriate compartment. In this arrangement, then the diameter of the carousel should be equal to, or less than the diameter of the reaction vessel opening, and the carousel positioned coaxially with the reaction vessel in order to ensure that the dispensing opening is always over the interior of the reaction vessel. Alternatively, if the carousel has a diameter larger than that of the reaction vessel opening then the carousel may need to be moved during dispensing to ensure that the actual compartment being emptied and the dispensing opening is over the reaction vessel opening.

### A substance delivery cycle preferably comprises the following steps:

The reaction vessel is opened, the dispensing unit with compartments loaded with the specified amounts of solid starting materials is positioned above the opening of the reaction vessel reservoir and the dispensing unit is operated so that a compartment is emptied into the reaction vessel. If necessary the dispensing unit is repeatedly operated until all the necessary starting materials contained in it have been loaded into the reaction vessel, the delivery assembly is retracted, and the lid is placed on the reaction vessel thereby closing it. If necessary, liquid components can then be supplied from the respective tanks. It is conceivable that the addition of the liquid and solid reaction components into the reaction vessel may be done in any order even though if is often preferable to first add the solids and then the liquids.

Optionally, as a precaution against substance degradation by contact with air and moisture, in particular during storage prior to dispensing into the reaction vessel, one or more of the compartments can be made airtight and flooded by inert gas.

In an embodiment of the invention one or more of the two fluid transfer lines may extend down to the bottom of the reaction vessel and may be used in an evacuation sequence to evacuate the contents of the reaction vessel. During an evacuation sequence, the valve that seals the port to one of the fluid transfer lines which extend down to the bottom of the reaction vessel is opened, and the pressure in the reaction vessel forces the contents via that fluid transfer line directly over to a secondary vessel. Preferably, to avoid contamination of synthesised compounds, there is a reaction mixture collection arrangement comprising a fluid transfer line, valve and secondary vessel which is used only for collecting the results of the chemical synthesis, and there is also an intermediate cleaning arrangement comprising a fluid transfer line, valve and secondary vessel for collecting the results of intermediate cleaning cycles. Alternatively if the pressure in the vessel is too low to transfer the reaction contents, the vessel may be pressurized via one of the upper ports. There are many different protocols for performing syntheses and the following is merely a non-limiting example of a method for performing microwave assisted chemical synthesis in accordance with the present invention. This chemical synthesis comprises several cycles of loading - heating - ejection. The following illustrates the steps comprised in one such cycle:
the lid of the reaction vessel is removed;
solid starting materials are introduced by the dispensing system;
the lid of the reaction vessel is replaced in sealing engagement with the reaction vessel;
liquids are loaded, the reaction vessel being depressurized during this loading by opening an upper port to a vent;
once loading is completed, all the valves are closed so that the reaction vessel is airtight, the reaction contents are heated by microwaves and the chemical synthesis is performed, typically at elevated pressure and temperature, according to the desired chemical synthesis protocol;
the reaction mixture collection arrangement is opened - causing the reaction mixture to be transferred to another vessel by the over pressure existing in the reaction vessel (if necessary the reaction vessel is further pressurized by opening a secondary upper port to inert gas pressure, to facilitate the transferring of any remaining reaction products).
   A cleaning cycle would use similar steps, using a cleaning solvent, without the addition of reaction components and transferring the contents of the reaction vessel to the waste.

### DESCRIPTION OF THE DRAWINGS

A preferred embodiment of the invention will now be described by way of non-limitative example with reference to the accompanying drawings, in which:
FIG. 1 illustrates schematically a device in accordance with a first embodiment of the present invention;
FIG. 2 illustrates an exploded view of a dispensing carousel in accordance with a first embodiment of the present invention.

### DETAILED DESCRIPTION OF THE INVENTION

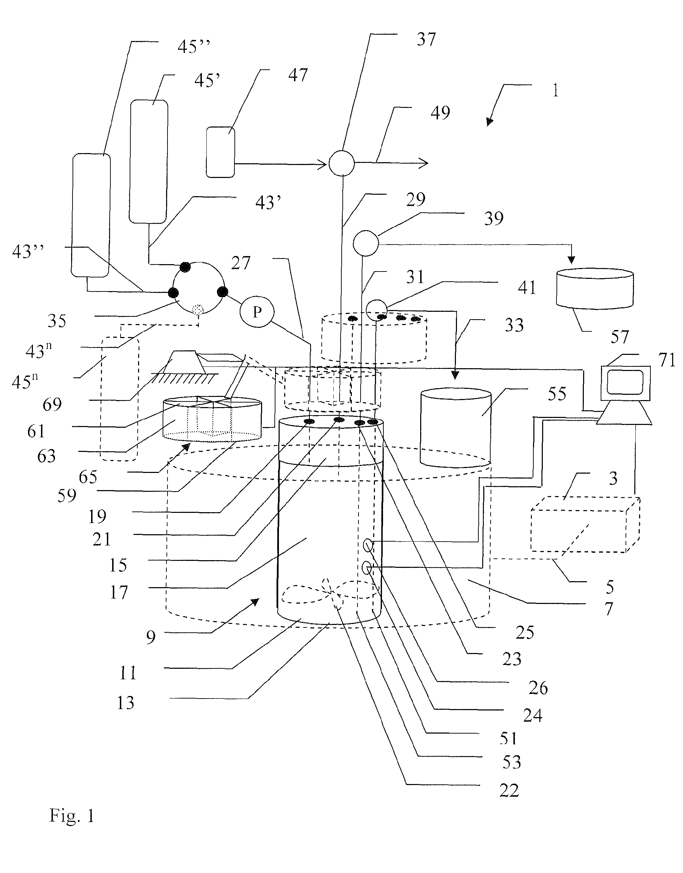

Figure 1 shows schematically a device 1 for microwave-assisted chemical synthesis of chemicals in accordance with a first embodiment of the present invention. The device comprises a microwave source 3 for generating microwave electromagnetic radiation. Microwave source 3 is in communication via microwave wave guide 5 with a microwave cavity 7 arranged to expose items within said cavity 7 to microwave radiation. Microwave source 3, wave guide 5 and cavity 7 which may be any suitable one known to a person skilled in the art are shown in dashed lines to simplify the figure. The cavity may preferably be a multimode cavity.

A reaction vessel 9 in the form of a tubular reservoir 11, closed at the lower end 13 and able to be fitted with a removable pressure resistant lid 15 at the upper end is positionable within microwave cavity 7. Lid 15 may be separated from reaction vessel 9 in order to allow the insertion of starting materials and for cleaning purposes. At least the portion of the reaction vessel 9 that is intended during use to be positioned in a microwave cavity has a wall 17 that is made from any suitable microwave transparent material such as quartz, glass or plastic. The lid 15 is provided with entry ports 19, 21, 23, 25 each joined to a separate fluid transport pipe 27, 29, 31, 33. Reaction vessel 9 is provided with a stirrer 22 for agitating the contents of the reservoir and a pressure sensor 24 and a temperature sensor 26 for measuring the conditions inside the reaction vessel 9.

Each set of a transport pipe and an entry port 19, 27; 21, 29; 23, 31; 25, 33 is provided with a valve 35; 37; 39; 41 which can be remotely operated to open or close access to the interior of the reaction vessel 9. Valve 35 is preferably a multiport valve which is connected by feed lines 43'. 43", 43ⁿ to containers 45', 45", 45ⁿ, each of which may contain a liquid component used in the synthesis. Valve 35 can be used to selectively connect feed lines 43'-43ⁿ to transport pipe 27 and entry port 19 to load liquid components, for example with the use of an accurate metering pump P, before and during the synthesis. Valve 37 is connectable to a source of pressurised fluid 47, for example nitrogen gas, which can be used to pressurise the inside of the reaction vessel when valve 37 is arranged so that the source of pressurised fluid is in communication with entry port 21. Valve 37 is also connectable to a vent 49 and when moved to a position where vent 49 is in communication with the inside of reaction vessel it can be used for venting pressure built-up in the reaction vessel.

Entry ports 23, 25 are provided with pipes 51, 53 which, when the lid 15 is sealed to the reaction vessel, extend to the bottom of the reaction vessel 9 to allow the evacuation of the contents of the reaction vessel 9. Evacuation of the contents via pipe 51 and/or pipe 53 can be achieved by pressurising the reservoir, for example by heating or by a reaction which forms gases or by the use of pressurised fluid and then manoeuvring valve 41 or valve 39 so that the interior of the reservoir is in fluid communication with the surroundings. Pipe 51 is connectable via valve 41 to a container 55 for collecting the results of the synthesis. Pipe 53 is connectable via valve 39 to a waste container or drain 57 for the disposal of waste products and used cleaning solutions.

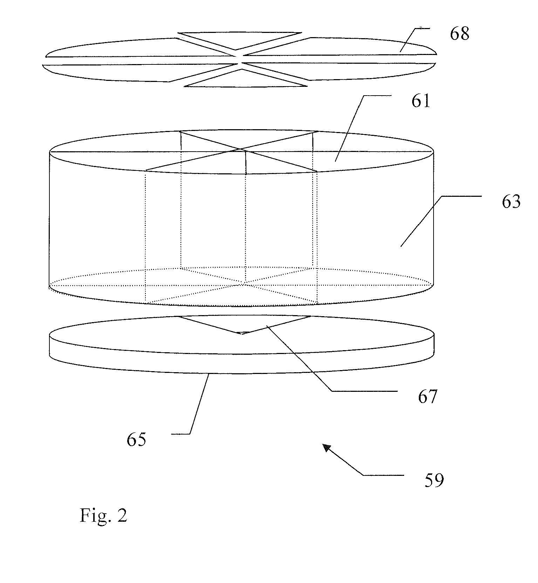

Solid starting materials which are to be used in the synthesis can be preloaded into a system for loading solid starting materials comprising a dispensing unit such as dispensing carousel 59. Dispensing carousel 59 comprises a plurality of compartments 61 that can each be loaded with starting materials either manually by the user or by an automated dispenser. As shown in detail in the exploded view of figure 2, the compartments 61 are arranged as through holes in a rotor 63 which is mounted on a fixed stator 65 which has a dispensing opening 67 passing through it. The dispensing opening 67 is the same shape and size as, or is bigger than, and is able to be aligned with, the compartments 61 in the rotor 63 such that when a compartment 61 in the rotor 63 is rotated to a position above the dispensing opening 67 then the contents of the compartment 61 drop through the opening into the reaction vessel. Each compartment can be provided with a lid 68 which can be placed into sealing engagement with the compartment in order to make the compartment airtight. This can be used to prevent contamination of the interior of the compartment by the ambient atmosphere. Optionally compartments can be filed with protective atmosphere, nitrogen gas, for example by loading and sealing the compartments in a chamber flooded with nitrogen gas, in order to prevent oxidisation of the starting materials contained in the compartments. It is conceivable to provide the sealed compartments with sealable openings, one, provided with a non-return valve, which can be used to vent the compartment and a further opening which can be connected to a source of inert gas in order to permit flushing of the contents with inert gas.

Carousel 59 can be preloaded with the required amounts of starting materials outside the reaction vessel 9. Before a chemical synthesis cycle takes place the reaction vessel can be opened and dispensing carousel 59 preferably positioned over reaction vessel 9. This manoeuvring can be achieved by, for example, a robot arm 69 comprised in the system for loading starting materials. Rotor 63 is then rotated so that the desired starting materials are dropped though dispensing opening 67 into the reservoir. Robot arm and rotor 63 may be controlled by a control device such as a computer 71. This computer may also control microwave source 3, remotely controlled valves 35-41, stirrer 22 and may use readings obtained from pressure and temperature sensors 24, 26 and any other sensors during running of a chemical synthesis in order to control the synthesis. Once the solid starting materials have been dispensed the dispensing unit 59 can be moved away from the device, the lid sealed onto the reaction vessel 9 and liquid components loaded into the reaction vessel 9 by appropriate manipulation of the remotely controlled valves. The chemical synthesis can then be run. Once the chemical synthesis is completed the synthesised products can be unloaded from the reaction vessel via pipe 51 and valve 41 to a container 55 for collecting the results of the chemical synthesis. The reaction vessel can then be cleaned and prepared for the next chemical synthesis run.

The above described constructions and methods are for illustrative purposes only and are not intended to limit the scope of the following claims.

## Claims

1. Device for microwave-assisted chemical synthesis including heterogeneous starting materials, comprising a reaction vessel (9), a microwave source for generating microwave electromagnetic radiation, means for transporting microwave electromagnetic radiation to said reaction vessel, at least one liquid reservoir containing a liquid component, means for transporting a liquid component from a liquid reservoir to said reaction vessel, wherein it further comprises an automated system for dispensing solid starting material into said reaction vessel.

2. Device in accordance with claim1 **characterised in that** said system for dispensing solid starting material comprises a dispensing unit (59) with a plurality of compartments.

3. Device in accordance with claim 2, wherein each compartment is arranged to individually dispense its contents into said reaction vessel (9).

4. Device in accordance with any of claims 2 or 3, wherein it further comprises a plurality of entry ports selectively connectable to one or more of: a source of pressurised fluid, a homogenous liquid phase starting material, a cleaning fluid, a waste drain, a waste container, a synthesised product container, a vent.

5. Method for performing microwave-assisted chemical synthesis using heterogeneous starting materials comprising the steps of:
a) loading a specified amount of at least one solid starting material into a solid dispensing unit (59);
b) dispensing the at least one solid starting material from the solid dispensing unit into said reaction vessel using an automated system;
c) sealing said reaction vessel (9) with a lid (15); and,
d) applying microwave radiation to the starting materials in the reaction vessel to perform a chemical reaction.

6. Method in accordance with claim 5, wherein during dispensing of the solid starting material/s said dispensing unit (59) is positioned over the reaction vessel (9).

7. Method in accordance with any of claims 5 or 6, wherein it further comprises the additional step of loading a liquid component into said reaction vessel before step d).

8. Method in accordance with any of claims 5 to 7, wherein the reaction product is evacuated from the reaction vessel using the existing over pressure within the reaction vessel.

9. Method in accordance with any of claims 5 to 8, wherein the reaction product of 2 or more reaction runs is pooled together.

10. Method in accordance with any of claims 5 to 9, wherein 2 or more solid starting materials are dispensed from the one and the same compartment in the solid dispensing unit (59).
